# EUROPEAN PATENT APPLICATION

(11) **EP 2 716 730 A1**
(43) Date of publication of application: **09.04.2014**
(21) Application number: 12187690.8
(22) Date of filing: 08.10.2012
(51) Int. Cl.: C09K 8/584, C09K 8/588, C09K 8/594, E21B 43/16

(54) **Method and device for the recovery of hydrocarbons from an oil reservoir**

(71) Applicant: MAERSK OLIE OG GAS A/S, 1263 Copenhagen K (DK)
(72) Inventor: McGuire, Patrick Lee, 1263 Copenhagen K (DK); Kapteijn, Pieter Karel Anton, 1263 København K (DK)
(74) Representative: Zacco Denmark A/S

(57) **Abstract**

The invention relates to a method and a device for the recovery of hydrocarbons from an oil reservoir. The method comprises the steps of providing production water, injecting the production water into an oil reservoir, and collecting hydrocarbons displaced by the production water from the oil reservoir, wherein the salinity of the production water is lowered prior to or during injection into the oil reservoir by admixing low salinity water having a dissolved salt content lower than the production water.

## Description

### FIELD OF THE INVENTION

The invention relates to a method and a device for the recovery of hydrocarbons from an oil reservoir.

### BACKGROUND

In the recovery of hydrocarbons from oil fields, various techniques are employed to optimize oil and gas production.

Traditional displacement methods use water to displace oil in a field, effectively pushing the oil to a collector point. Chemicals such as surfactants may be added to alter the flow and mixing properties of the oil/water mixture that is obtained.

An alternative method is to use gas to displace oil. However, in many cases the availability of large volumes of pressurized gas is limited, making the method relatively expensive. It may also be troublesome to maintain the pressure once a major part of the oil is recovered, and collapse of the field structure may also become a problem. In addition, not all gasses are suitable or desirable to have injected into an oil field. Nitrogen gas is fairly inert but is relatively expensive to obtain. Another known method is to re-inject the natural gas (mostly consisting of methane) produced from the oil field.

Combined methods include water-alternating-gas (WAG) which uses intermittent injection of water and gas, and SWAG wherein water and gas are injected simultaneously. Carbon dioxide is a favoured gas to inject in the WAG method. Such methods are believed to yield 5-10% recovery improvement under favourable conditions, compared to continuous water injection.

A disadvantage of the known techniques is hat relatively large fractions of oil are left in the field, and that the injected water may leave residual oil fractions harder to recover. Also, residual chemicals in the oil field potentially hamper future attempts for recovering the residual oil.

### SUMMARY

It is an object of the invention to increase the oil recovery yield. It is another object of the invention to increase the oil recovery yield while minimizing the introduction of additional agents into the oil field that may complicate future attempts to recover the remaining oil.

The invention provides a method for producing hydrocarbons, comprising the steps of providing production water, injecting the production water into an oil reservoir, and collecting hydrocarbons displaced by the production water from the oil reservoir, wherein the salinity of the production water is lowered prior to or during injection into the oil reservoir by admixing low salinity water having a dissolved salt content lower than the production water. It was discovered that lowering the salinity of the water increased the yield in the recovery of oil from an oil reservoir. Also, the addition of low salinity water does not add to the complexity of the compounds present in the oil field. The low salinity water may be added to the production water prior to injection, or the low salinity water may be co-injected, causing mixture after injection.

The patent application WO2008029124 describes that aqueous displacement fluids having a total dissolved solids (TDS) content of between 200 pp, and 10.000 ppm are useful in recovering crude oil. Relatively expensive methods such as reverse osmosis or forward osmosis are mentioned as methods to achieve injection water with the desired total dissolved solids.

Preferably, the salinity of the resulting mixture of production water and low salinity water is monitored continuously or at intervals, and optionally the mixing ratio is adjusted to keep the salinity within predetermined limits. Thus, the yield of the retrieved hydrocarbons becomes more predictable, which allows for better planning of the logistic process and further process steps after the retrieval of the hydrocarbons from the oil field.

The amount of dissolved salts in water can be determined by well-known chemical analysis techniques. A relatively quick way to monitor relative salinity is to measure the electric conductivity of the water, wherein a high electric conductivity corresponds to a high dissolved salt content. Using such methods the low salinity water may for instance have an electric conductivity below 1000 µS/cm, preferably below 100 µS/cm, most preferably below 10 µS/cm.

It is preferred if the average dissolved salt content of the production water after admixing the low salinity water is less than 10,000 ppm total dissolved solids (TDS), preferably less than 5,000 ppm TDS, more preferably less than 2,000 ppm TDS.

Preferably, the admixed low salinity water has a multivalent cation content lower than 0.02 mol %, preferably less than 0.005 mol %. The lower the diluted salt content of the low salinity water, the smaller the volume of low salinity water that needs to be added for a significant increase in oil recovery. Low salinity water may be obtained from various sources, such as fresh water sources or collected rain water. However, low salinity water is often not readily available, so active desalination through known processes such as reverse osmosis may be needed. An advantageous form of low salinity water is distilled water, which may be obtained through for instance reduced pressure distillation or solar evaporation.

It is advantageous if the low salinity water is obtained as a combustion product from hydrocarbons. Water may be collected from exhaust fumes using a cooler, which is essentially a distillation process. The water has a relatively low salinity comparable to distilled water and is often readily available from combustion of hydrocarbons already occurring at or near oil production sites. Energy obtained from the same combustion process may also be used in the method, for instance for the transport, admixing, injection and/or hydrocarbon collection steps.

Preferably, the low salinity water is obtained as a combustion product from hydrocarbons collected from the oil reservoir and/or a neighboring oil reservoir. Thus, at least part of the low salinity water needed may be obtained from the oil production itself, resulting in an essentially self-sustainable process.

More preferably, the low salinity water is obtained as a combustion product from hydrocarbons mostly derived from the combustion of natural gas. Gas, primarily methane gas, obtained during the retrieval of oil is readily available, hence the method allows for easy integration into existing methods.

It is preferred if also a non-aqueous injectant, preferably consisting of carbon dioxide, nitrogen gas or mixtures thereof, is injected into the oil reservoir simultaneously or intermittently with the production water. Thus, the amount of retrieved hydrocarbons may be even further enhanced. Improvements relating to existing water-alternating-gas injection (WAG) are enhanced using the method described herein.

Preferably, the non-aqueous injectant essentially consists of carbon dioxide, wherein the carbon dioxide is a combustion product obtained from the combustion of hydrocarbons collected from the oil reservoir. Using carbon-dioxide makes the system at least partly self-sustainable.

More preferably, both the low salinity water and the carbon dioxide injected into the oil reservoir are combustion products obtained from the combustion of hydrocarbons collected from the oil reservoir

In addition to the measures described above, the yield may be further improved if the production water comprises at least one mobility control agent, preferably a polymer mobility control agent.

The mobility control agent may be selected from the group consisting of alkyl sulfonates, olefin sulfonate, aryl sulfonates, polysaccharides, polyacrylamides, polyethyleneoxides, polypropyleneoxides.

The invention further provides a device for the recovery of hydrocarbons from an oil reservoir, comprising
- a source of production water
- a source of low salinity water having a dissolved salt content lower than the production water,
- at least one injector coupled to the source of production water and the source of low salinity water, arranged for injecting a mixture of the production water and the low salinity water into the oil reservoir.

Such a device can be used to perform the method as described herein.

It is preferred if the injector is coupled to the source of production water and the source of low salinity water through a mixer for mixing the production water and low salinity water. This construction allows for the mixing of the production water and the low salinity water to the desired salinity. The mixer may be provided with a monitor, such as an electrical conductivity meter, to monitor the resulting salinity. This information may be used to alter the ratio of production water and low salinity water.

Preferably, the source of low salinity water comprises a combustor for hydrocarbons, supplied with an exhaust water collector. Thus, water obtained from combustion of hydrocarbons may be collected for use in lowering the salinity of the production water. If the amount of low salinity water obtained by combustion is insufficient, also low salinity water from other sources may be admixed simultaneously.

### BRIEF DESCRIPTION OF THE DRAWINGS

Figure 1 shows a production method for hydrocarbons.
Figure 2 shows a device for performing the method as described herein.

### DESCRIPTION OF PREFERRED EMBODIMENTS

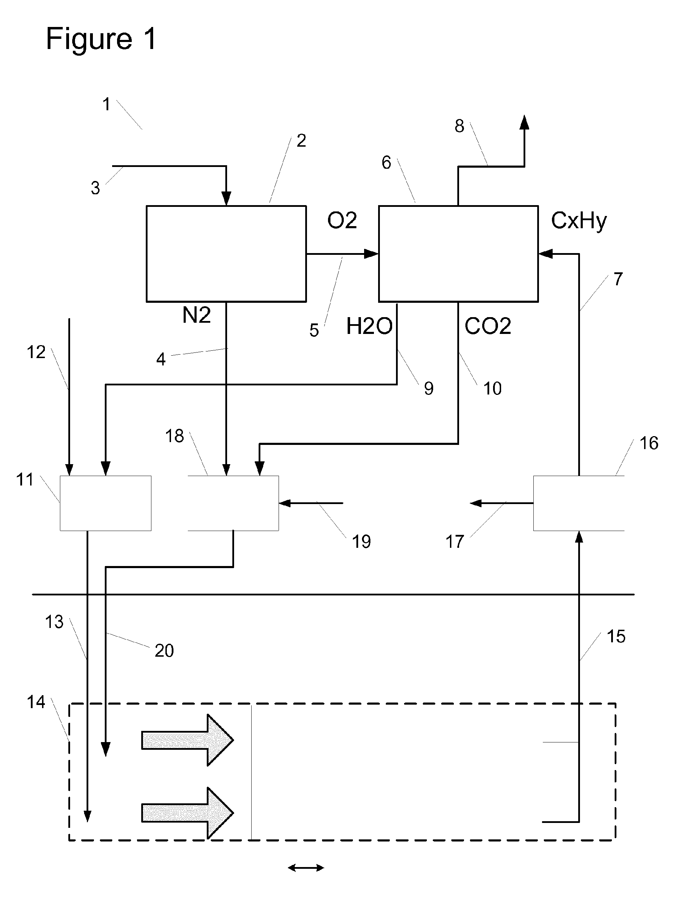

Figure 1 schematically shows a device 1 as described herein. The device 1, wherein an air separator unit 2 separates air 3 into nitrogen gas 4 and oxygen 5. The oxygen is used in a combustion unit 6 to combust hydrocarbons 7, yielding energy 8, water 9 and carbon dioxide 10 as main products. The water 9 from the combustion unit 6, collected by a distillation cooler, has a low amount of dissolved salts, leading to a low salinity comparable to distilled water. The low salinity water 9 is lead to a first injector unit 11. In the injector unit 11, the water is brought to the desired temperature and pressure. The low salinity water 9 is mixed with regular production water 12 having a higher salinity than the water 9 retrieved from the combustor 6. Optionally, other liquids and/or flow-affecting compounds such as surfactants may also be added prior to injection. The mixed water 13 has a lower salinity than the original production water 12, and is injected into an oil field 14. The relatively low salinity water displaces hydrocarbons present in the oil field, that are collected at one or more production wells 15 through a collector unit 16. Part 17 of the collected hydrocarbons is transported away for further processing, whereas another part of the hydrocarbons is lead to the combustor 6 as fuel. The part used for fuel is preferably the volatile fraction of the produced hydrocarbons, in particular methane gas.
Optionally, carbon dioxide 10 from the combustor 6 and/or nitrogen gas 4 from the air separation unit 2 are transported to a second injector unit 18. In the injector unit 43, the gaseous injectants are mixed and brought under the desired temperature and pressure. Optionally, additional gases 19 are ad mixed such as additional carbon dioxide and/or nitrogen gas from other sources. The gaseous injectants 20 may also be injected into the oil field 14, either simultaneously with the water 13, or intermittently in a water-alternating-gas method.

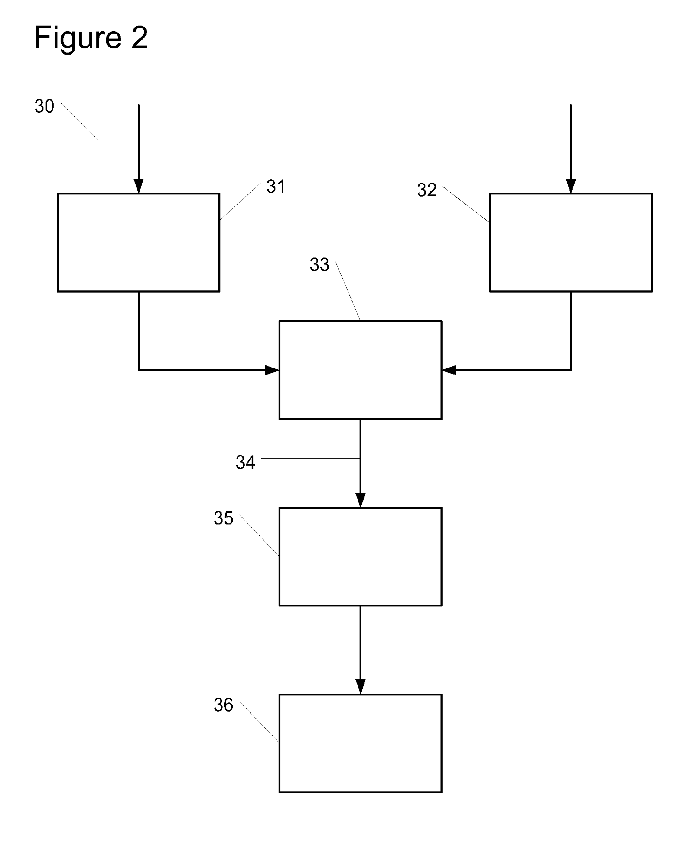

Figure 2 schematically shows a device 30 that can be integrated in the system in figure 1. The device 30 comprises a reservoir of production water 31 and a reservoir of low salinity water 32 that has a lower dissolved salt content than the production water 31. The production water 31 may for instance be supplied from re-used water from the production water, and is optionally supplied with additional mobility control agents as described herein. The low salinity water 32 may for instance be supplied from a hydrocarbon combustion unit. The production water 31 and low salinity water 32 are combined in a mixing unit 33, in a predetermined ratio that can be adjusted to obtain the preferred salinity/dissolved salt content. The mixed water 34 is led through a monitoring unit 35, that measures the salinity, for instance through electric conductivity measurements. If the salinity as measured is outside predetermined limits, the mixing ratio in the mixer unit 33 may be adjusted accordingly. Subsequently, the mixed water is lead to the actual injector 36 for injection into the oil well.

## Claims

1. Method for producing hydrocarbons, comprising the steps of
a) providing production water
b) injecting the production water into an oil reservoir, and
c) Collecting hydrocarbons displaced by the production water from the oil reservoir, wherein the salinity of the production water is lowered prior to or during injection into the oil reservoir by admixing low salinity water having a dissolved salt content lower than the production water.

2. Method according to claim 1, wherein the average dissolved salt content of the production water after admixing the low salinity water is less than 10,000 ppm total dissolved solids (TDS), preferably less than 5,000 ppm TDS, more preferably less than 2,000 ppm TDS.

3. Method according to claim 1 or 2, wherein the admixed low salinity water has a multivalent cation content lower than 0.02 mol %, preferably less than 0.005 mol %

4. Method according to any of the preceding claims, wherein the salinity of the resulting mixture of production water and low salinity water is monitored continuously or at intervals, and optionally the mixing ratio is adjusted to keep the salinity within predetermined limits.

5. Method according to any of the preceding claims wherein the low salinity water is obtained as a combustion product from hydrocarbons.

6. Method according to claim 5, wherein the low salinity water is obtained as a combustion product from hydrocarbons collected from the oil reservoir and/or a neighboring oil reservoir.

7. Method according to any of the claims 5 or 6, wherein the low salinity water obtained as a combustion product from hydrocarbons is mostly derived from the combustion of natural gas.

8. Method according to any of the preceding claims, wherein also a non-aqueous injectant, preferably consisting of carbon dioxide, nitrogen gas or mixtures thereof, is injected into the oil reservoir simultaneously or intermittently with the production water.

9. Method according to claim 8, wherein the non-aqueous injectant essentially consists of carbon dioxide, wherein the carbon dioxide is a combustion product obtained from the combustion of hydrocarbons collected from the oil reservoir.

10. Method according to claim 9, wherein both the low salinity water and the carbon dioxide injected into the oil reservoir are combustion products obtained from the combustion of hydrocarbons collected from the oil reservoir.

11. Method according to any of the preceding claims, wherein the production water comprises at least one mobility control agent, preferably a polymer mobility control agent.

12. Method according to claim 11, wherein the mobility control agent is selected from the group consisting of alkyl sulfonates, olefin sulfonate, aryl sulfonates, polysaccharides, polyacrylamides, polyethyleneoxides, polypropyleneoxides.

13. Device (30) for the recovery of hydrocarbons from an oil reservoir, comprising
- a source of production water (31),
- a source of low salinity water (32) having a dissolved salt content lower than the production water,
- at least one injector (36) coupled to the source of production water and the source of low salinity water, arranged for injecting a mixture of the production water and the low salinity water into the oil reservoir.

14. Device according to claim 13, wherein the injector is coupled to the source of production water and the source of low salinity water through a mixer (33) for mixing the production water and low salinity water.

15. Device according to claim 13 or 14, wherein
the source of low salinity water comprises a combustor for hydrocarbons.
